(19) Europäisches Patentamt / European Patent Office / Office européen des brevets

(11) **EP 4 009 586 B1**

(12) **EUROPEAN PATENT SPECIFICATION**

(45) Date of publication and mention
of the grant of the patent:
**05.06.2024  Bulletin 2024/23**

(21) Application number: **21212905.0**

(22) Date of filing: **07.12.2021**

(51) International Patent Classification (IPC):
**H04L 9/40** *(2022.01)*

(52) Cooperative Patent Classification (CPC):
**H04L 63/1425**

(54) **A SYSTEM AND METHOD FOR AUTOMATICALLY NEUTRALIZING MALWARE**

SYSTEM UND VERFAHREN ZUR AUTOMATISCHEN NEUTRALISIERUNG VON MALWARE

SYSTÈME ET PROCÉDÉ DE NEUTRALISATION AUTOMATIQUE DE LOGICIELS MALVEILLANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2020  IL 27926720**

(43) Date of publication of application:
**08.06.2022  Bulletin 2022/23**

(73) Proprietor: **Deutsche Telekom AG
53113 Bonn (DE)**

(72) Inventors:
• **MIKITYUK, Alexandra
  12163 Berlin (DE)**
• **YIN, Ming
  16341 Panketal (DE)**
• **LAUFER, Viktoria Anna
  8000 Szekesfehervar (HU)**
• **AMIT, Guy
  3602131 Kiryat Tiv'On (IL)**
• **SHABTAI, Asaf
  7684200 Hulda (IL)**
• **ELOVICI, Yuval
  7986400 Arugot (IL)**
• **BRODT, Oleg
  8471621 Beer Sheva (IL)**
• **MIMRAN, David
  6215505 Tel Aviv (IL)**

(74) Representative: **Graf von Stosch
Patentanwaltsgesellschaft mbH
Prinzregentenstraße 22
80538 München (DE)**

(56) References cited:
**CN-A- 108 200 030          US-A1- 2019 034 633
US-A1- 2020 050 761**

**Description**

**Field of the Invention**

The present invention relates to the field of cyber security. More particularly, the present invention relates to a system and method for automatically neutralizing fileless malware on IoT devices facing the internet, by using dynamic behavior analysis.

**Background of the Invention**

Nowadays, there are home and/or office devices that connect to a data network such as the internet through the IoT (the Internet of Things, or IoT, is a system of interrelated computing devices, mechanical and digital machines, objects, animals, or people that are provided with Unique Identifiers (UIDs) and the ability to transfer data over a network, without requiring human-to-human or human-to-computer interaction). However, there are attacks and infiltration of malware, penetrating through this connection and as a result, the device operation is disrupted.

Malware attacks called fileless attacks use a code that is injected through the data network into the device's operating software (rather than using malware-containing files), thus disrupting its operation.

Auto remediation components are usually used once an anomaly on an IoT device has been detected, and a remedy for the underlying cause is necessary. Involving human remediation is costly and not always possible due to scale and complexity. Therefore, an automated remediation component (such as a "self-healing agent") is required. In case of a fileless malware attack, most of the conventionally available remediation methods are manual and are carried out by a computer technician or by a professional person, who decides whether a detected anomaly results from a device malfunction or malicious software (malware) attack. This manual repairing process is ineffective since it is long, cumbersome, and requires trained personnel.

It is therefore an object of the present invention to provide a system and method for automatically detecting fileless malware intrusion into connected IoT devices.

It is another object of the present invention to provide a system and method for automatically neutralizing or reducing the damage caused by fileless malware. Other objects and advantages of the invention will become apparent as the description proceeds.

The present invention is defined by the subject matter of the appended independent claims. Further advantageous aspects are disclosed in the dependent claims.

**Brief Description of the Drawings**

The above and other characteristics and advantages of the invention will be better understood through the following illustrative and non-limitative detailed description of preferred embodiments thereof, with reference to the appended drawings, wherein:

- Fig. 1 is a block diagram of the system and method proposed by the present invention for one device;
- Fig. 2 is a block diagram of the system proposed by the present invention;
- Fig. 3 shows the **Monitoring** component that includes a Grafana server;
- Fig. 4 shows the **Monitoring** component that includes a **Kibana** open-source data visualization and exploration tool;
- Fig. 5 shows a job scheduler components, according to an embodiment of the invention ;
- Fig. 6 shows a 34 devices testbed;
- Fig. 7 shows a 5 devices testbed;
- Fig. 8 shows a Raspberry Pi testbed;
- Fig. 9 shows the Remediation Selector in the form of an LSTM neural network
- Fig. 10 shows the results of the calc_score function;
- Fig. 11 is an illustration of the proposed system operation, learning and training process;
- Fig. 12 shows the "Train agent" workflow; and
- Fig. 13 shows the workflow graph.

**Detailed Description of the Invention**

The present invention provides a system and method for automatically neutralizing fileless malware (fileless malware is malicious software that is hard to detect and remove, since it uses legitimate programs to infect a computer, without relying on files and leaves no footprint), injected into connected IoT devices, using dynamic behavior analysis. The system is designed to detect an intrusion into the IoT device and react to the injected malware. The system and method proposed by the present invention use a distributed, collaborative learning algorithm that models the behavior and reactions of all the devices in the network when being attacked by malware. The method consists of two separated algorithms, one for intrusion detection and one for auto-remediation(s).

In order to detect intrusions, the system and method proposed by the present invention use any anomaly detection algorithm, that surveys the internet connection, detects irregular activities, and reliably flags them as intrusions. A remediation(s) for the infected device is selected by an algorithm, which is a variation of classic evolutionary learning algorithm. This algorithm inspects the device state in terms of features extracted from the device, in order to choose a new remediation action. Combining the two separated algorithms creates a system that is able to effectively detect, repair and neutralize fileless threats arriving from the internet.

An auto-remediation agent is a machine learning-based software that can respond to technical difficulties and cyber-attacks. The key component of this machine learning-based software is an LSTM (Long Short-Term Memory) neural network (an artificial recurrent neural network (RNN) architecture used in the field of deep learning and comprising feedback connections. LSTM can process not only single data points such as images, but also entire sequences of data such as speech or video) that are capable of figuring out what is the most proper response for each detected anomaly. This LSTM neural network can be trained using its agents in the network. The training process is based on the realms of evolutionary strategies and reinforcement learning. The combination of evolutionary machine learning approach and the design of remediation creates a remediation agent that can learn and improve over time.

The remediation agent is activated, once an anomaly has been detected by an appropriate anomaly detection mechanism. Typically, an anomaly detection mechanism detects anomalies based on deviations from a baseline memory flow for a given process. Therefore, such anomaly implies that a cyber-attack is taking place. Cyber-attacks are manifested of two main stages: (1) an infection/intrusion stage; and (2) an exploitation stage. The remediation agent uses the anomaly detection mechanism for detecting the infection/intrusion. Once intrusion has been detected, the remediation agent tries to find the proper remediation for the unfolding exploitation using its remediation selection component (i.e., the LSTM neural network).

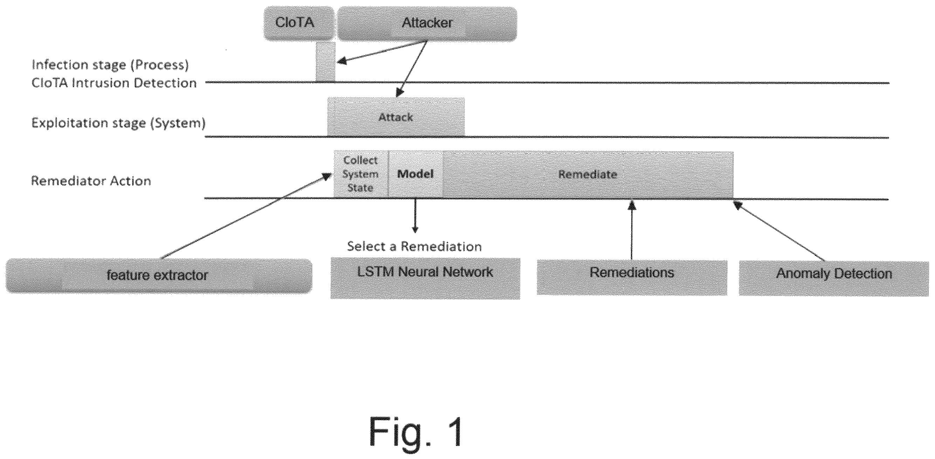

Fig. 1 is a flow chart of the proposed system. The process flow consists of 3 stages: an infection/intrusion stage, followed by an exploitation stage, followed by a remediation stage.

**Infection/intrusion stage:**

It is assumed that during a cyber-attack (any attack that an anomaly detection mechanism can handle - e.g. memory-based attacks for a monitored process), first, a memory anomaly occurs. This anomaly is detected by an anomaly detection mechanism and represents an attempt of an attacker to penetrate a monitored IoT device.

**Exploitation stage:**

In this stage, the attacker is already present on the device, and it launches an attack. For example, starting a DDoS campaign using the device, or trying to mine cryptocurrency using infected IoTs CPU/Memory, etc. This exploitation stage can happen immediately after the intrusion into the device, or at any time afterwards, which the attacker chooses.

**Remediation stage:** Once the anomaly detection mechanism identifies an intrusion (due to anomaly in memory jumps of a monitored process), it will activate the remediation component, that will react to the attack.

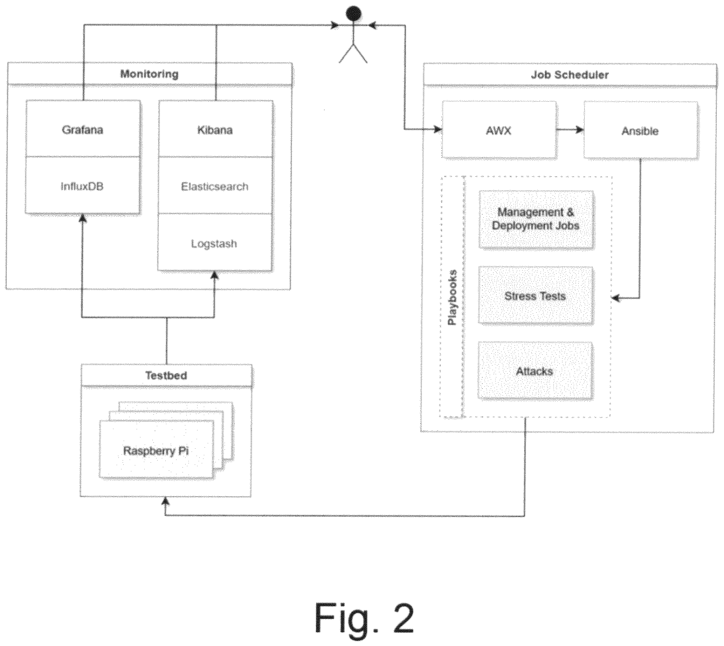

The remediation agent consists of the following main components (as shown in Fig. 2): a **Job Scheduler** component, a **Testbed** component and a **Monitoring** component.

Fig. 2 is a block diagram of the system proposed by the present invention. The **Job Scheduler** component is an automation system for executing management, deployment and test jobs on the testbed component. The **Testbed** component is a set of Raspberry Pi devices (Raspberry Pi is the name of a series of single-board computers made by the Raspberry Pi Foundation, that aims to educate people in computing and create easier access to computing education), on which tests are conducted. The **Monitoring** component is a full monitoring system with a dashboard that displays various metrics from the testbed devices.

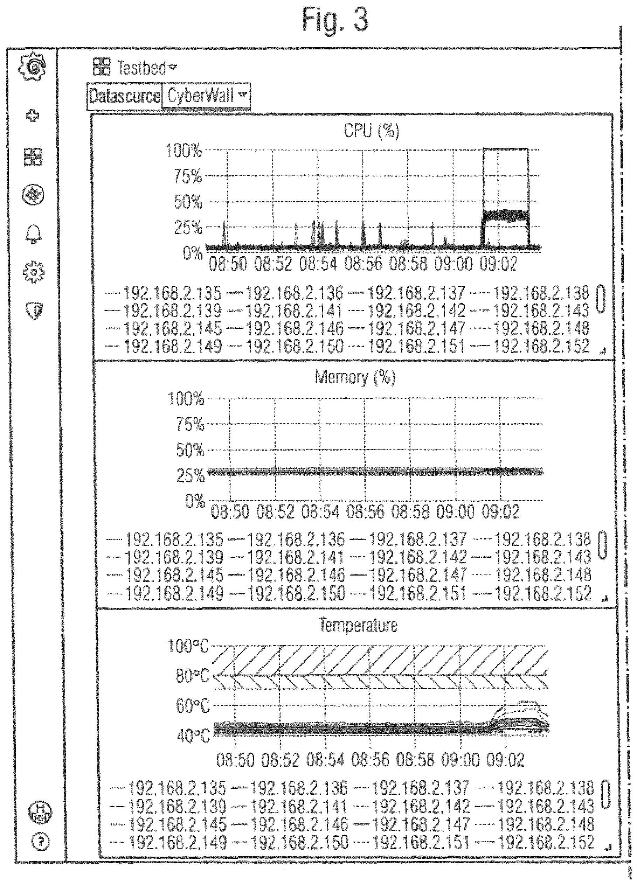

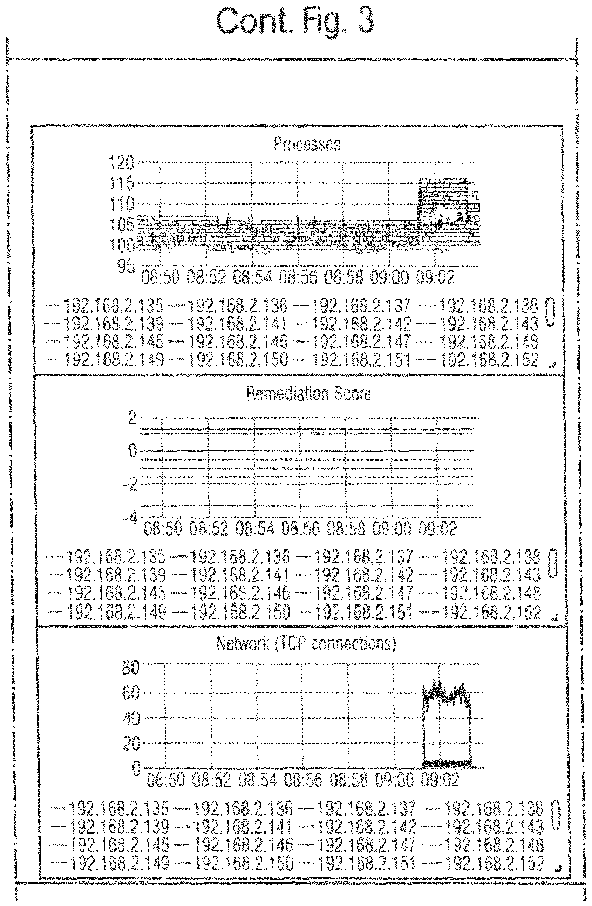

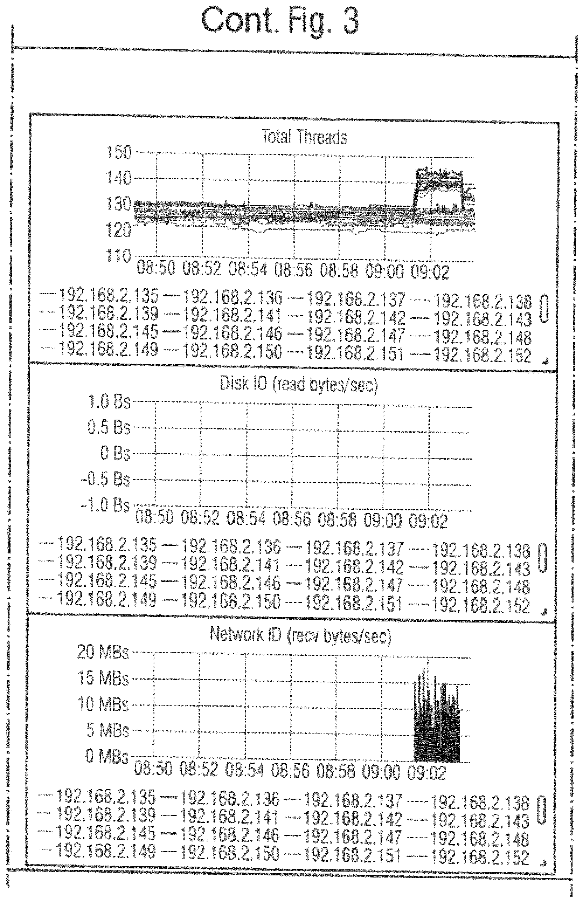

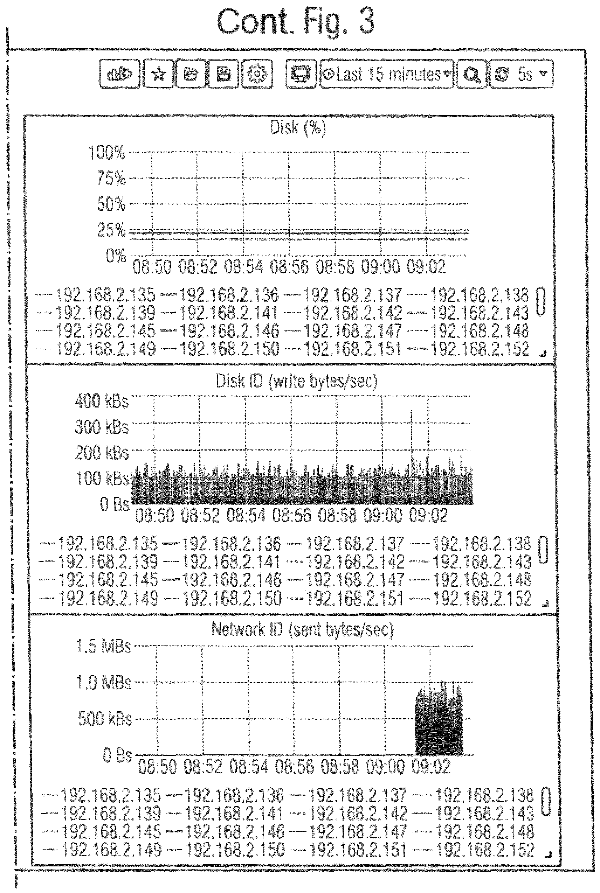

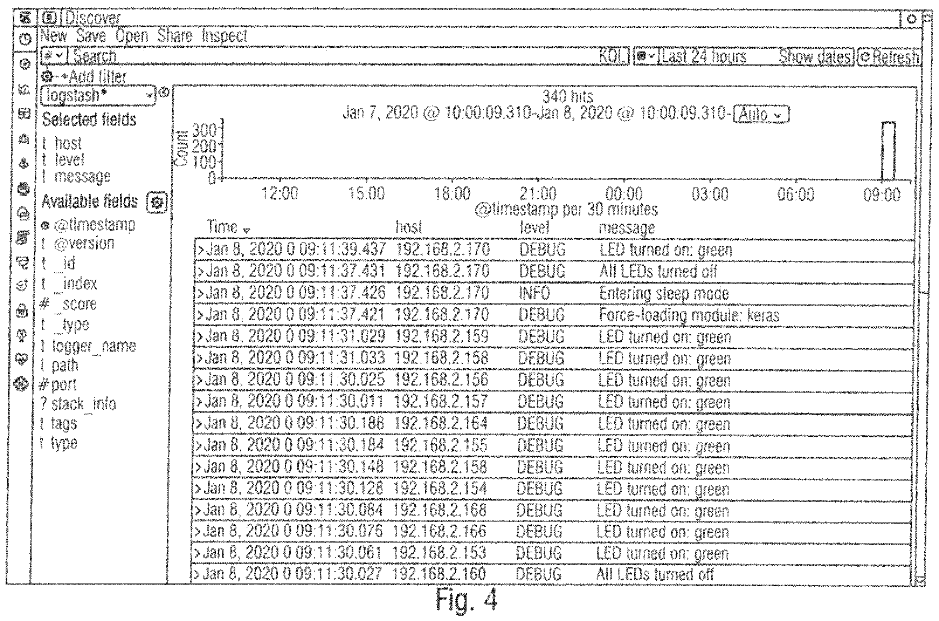

In one embodiment, the **Monitoring** component includes a Grafana server (a multi-platform open-source analytics and interactive visualization web application, shown at Fig. 3) that gathers the collected metrics and displays them in an easy-to-understand friendly dashboard (of course, using a Grafana server is one example and other applications may be equivalently used by a person skilled in the art). The metrics are generated by telegraf (an off-the-shelf agent installed on each device in the testbed) and stored on an InfluxDB (time-series database) instance. The **Monitoring** component also includes a **Kibana-** an open-source data visualization and exploration tool (shown in Fig. 4) used for log and time-series analytics, application monitoring, and operational intelligence (of course, using a Kibana tool is one example and other tools may be equivalently used by a person skilled in the art). The IoT devices in the testbed send logs to a remote Logstash server, which parses and transfers them to ElasticSearch (a distributed, free and open search and analytics engine for all types of data, including textual, numerical, geospatial, structured, and unstructured) for indexing.

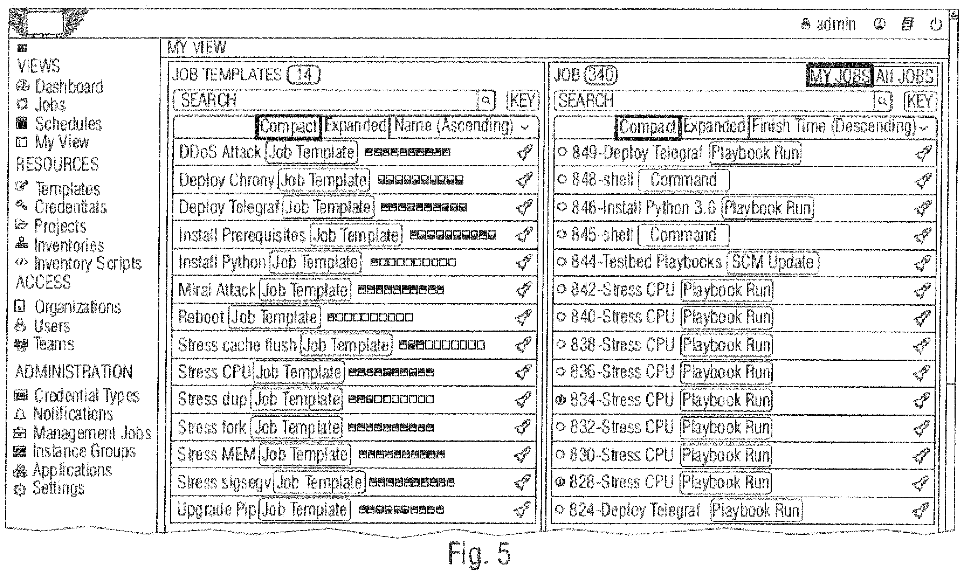

Fig. 5 shows a **Job Scheduler** component that includes an **Anisble, AWX (GUI) and Playbooks.** The **Anisble** is an open-source automation platform, used for IT tasks such as configuration management, application deployment, intra-service orchestration and provisioning. The **AWX (GUI)** is an open-source web application that provides a user interface, REST API, and task engine for Ansible. The AWX allows managing Ansible playbooks, inventories, and schedule jobs to run using the web interface.

Playbooks in this environment have two main usages: **Management & Deployment-**these are administrative playbooks, i.e. rebooting the devices, installing new software, configuring services, etc., and **Attacks & Stress Tests-** used for stress testing various components on the IoT devices, e.g. CPU, memory, network, disk, etc. and executing cyber-attacks on the environment such as DDoS attack, etc.

The **Testbed** component is an array of RPi (Raspberry Pi - a series of small single-board computers) devices interconnected by a switch. The RPis are used for testing and demonstration of various kinds of cyber-attacks on IoT devices.

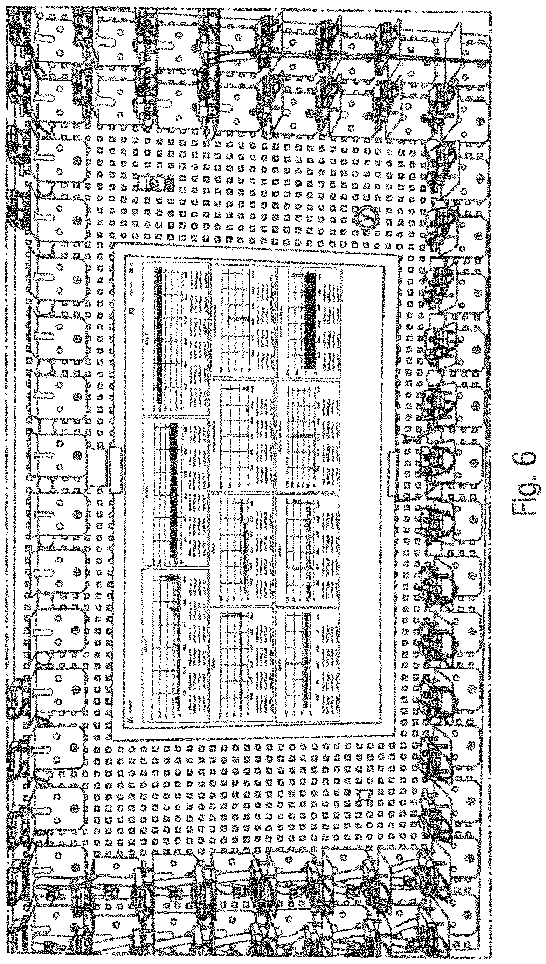

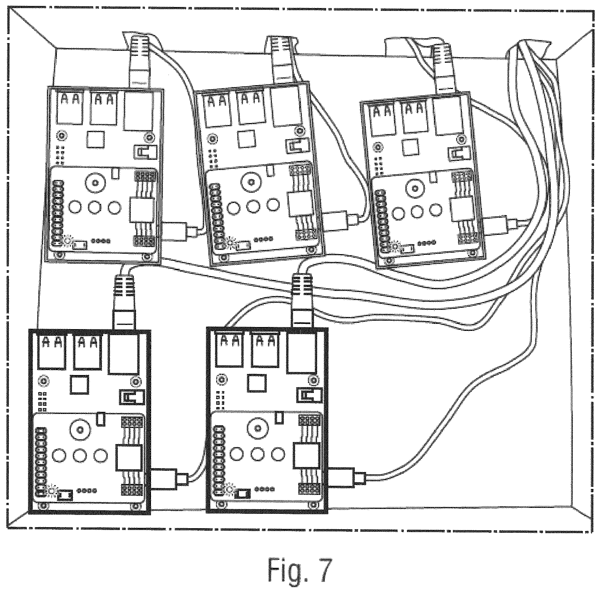

The environment used by the present invention contained two testbeds, 1) a smaller (5 devices, shown at Fig. 7) mainly used for development and testing and a 2) larger, "Cyber Wall" (34 devices, shown at Fig. 6) used for launching attacks and for training purposes.

In the performed experiments, the AWX interface is used to launch attacks and stress-tests on the Cyber-Wall environment and view the agent's reactions in Kibana (an open-source analysis and visualization system) and Grafana monitors.

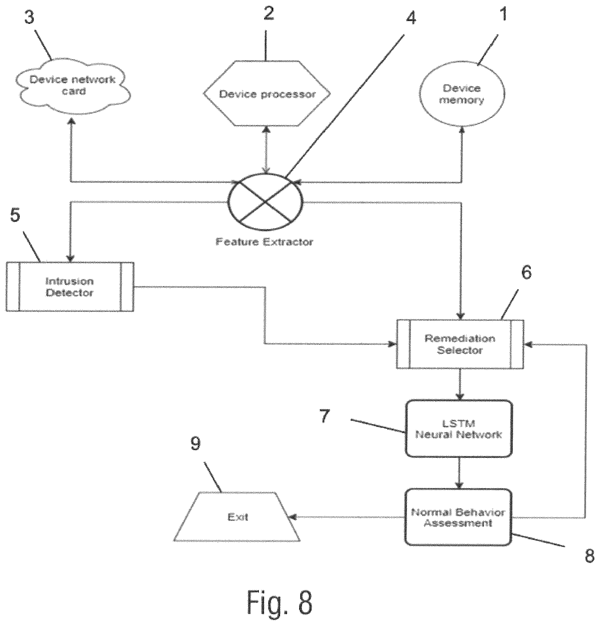

As mentioned, the main goal of the present invention is to be able to detect intrusions and react to them, by using a series of pre-defined remediations. To achieve this goal, each agent running on the Raspberry Pi testbed consists of the following three components (shown in Fig. 8), wherein each component is independent, and is built from smaller components that support each other. The three components are:

    1. **A Remediation selector-** A Evolutionary learning-based software that learns in real-time how different pre-defined actions affect the monitored devices. In order to develop software, there is a need to implement the following components:

        ◦ **A Normal behavior assessment component-** a machine learning model that is responsible for providing feedback to the Evolutionary learning algorithm. This component is independent and responsible for estimating if the device is under attack or not.

        ◦ **A Feature extractor module-** a software module that records measurements from the device such as the device temperature, the number of incoming bytes, the number of unique connections etc. Those measurements will represent the device behavior, in each timestamp.

        ◦ **An LSTM Neural Network-** a neural network that uses the features from the feature extractor together with knowledge of previous remediation(s) and the last score from the Normal behavior assessment component to choose fit remediation (a repairing action) for the situation.

    2. **An Intrusion detector-** can be any anomaly detection algorithm that inspects the internet connection and flags suspicious behavior as intrusions.

    3. **A Network communication module-** The remediation selection component and the Intrusion detection components should be distributed, in order to learn from all the devices in the network. To handle this procedure, the network communication module should be able to handle file sharing.

The steps flow of the system and method proposed by the present invention includes the following steps:

    1) Detection

    2) Inspection

    3) Remediation

    4) Check state

    5) Go to step TWO if the state is not normal.

**The Feature extractor component (module)**

The feature extractor component (or module), is a software module for collecting metrics from the system. In this example, the feature extractor is based on a shelf product, Telegraph (GitHub: https://github.com/influxdata/telegraf). The metrics collected by the feature extractor include metrics from the hardware and the software of the device. The Telegraph software extracts a lot of metrics (~185, depending on the device) by categories. Out of those features, 52 metrics have been selected which are related to process, memory, disk, and network. The selection was done using a decision tree - feature importance function. The goal of the selection was to differentiate between metrics of devices under stress tests and devices in a normal state .

Table 1 below includes a Feature list, sorted according to feature importance level:

Table 1 - List of Selected Features

| | | | |
|---|---|---|---|
| (1) net_bytes_recv | | (19) net_tcp_activeopens | (37) netstat_tcp_listen |
| (2) mem_committed_as | | (20) )net_udp_outdatagrams | (38) cpu_usage_iowait |
| (3) mem_shared | | (21) disk_inodes_used | (39) diskio_write_bytes |
| (4) processes_running | | (22) diskio_writes | (40) diskio_write_time |
| (5) system_uptime | | (23) net_tcp_passiveopens | (41) swap_in |
| (6) netstat_tcp_time_wait | | (24) net_udp_ignoredmulti | (42) cpu_usage_softirq |
| (7) mem_slab | | (25) mem_page_tables | (43) disk_free |
| (8) | mem_cached | (26) mem_active | (44) net_udp_ignoredmulti |
| (9) | mem_mapped | (27) mem_free | (45) disk_inodes_free |
| (10) | mem_swap_cached | (28) mem_dirty | (46) mem_used |
| (11) | mem_inactive | (29) cpu_usage_user | (47) processes_total_threads |
| (12) | mem_buffered | (30) net_ip_outrequests( | (48) mem_used_percent |
| (13) | cpu_usage_idle | (31) diskio_read_bytes | (49) disk_used |
| (14) | net_udp_indatagrams | (32) net_packets_sent | (50) disk used_percent |
| (15) | net_ip_indelivers | (33) net_tcp_outsegs | (51) net_packets_recv |
| (16) | diskio_reads | (34) net_ip_inreceives | (52) cpu_usage_system |
| (17) | net_bytes_sent | (35) processes_total | |
| (18) | net_tcp_insegs | (36) processes_idle | |

**The Intrusion detector**

In this example, the anomaly detection mechanism is being used as the intrusion detector. Once the anomaly detection mechanism identifies an anomaly it informs the remediation agent. The system proposed by the present invention is based on intrusion detection ability. The proposed method uses any collaborative method that can use the data that the remediation selector is already using and sharing across the network. Typically, those intrusion detection algorithms try to model the behavior of the device, or an application. When the device performs some irregular activity, the algorithm will notify about an anomaly in the behavior, or in the network case, it can be an intrusion. Such algorithms use clustering and Markov Chains (A Markov model is a stochastic method for randomly changing systems where it is assumed that future states do not depend on past states. These models show all possible states as well as the transitions, rate of transitions and probabilities between them. Markov chain is a kind of Markov model used by systems that are autonomous and have fully observable states) to perform this modeling.

**The Remediation Selector**

The Remediation Selector component is trying to automatically react and defeat fileless malware. Dealing with malware may be complicated, and usually, anti-viruses use rule-based systems and signature analysis in order to handle malware. In the present invention, the devices in the network use a collaborative evolutionary learning algorithm, in order to handle malware. The knowledge in terms of scores from the Normal behavior component is shared to all of the devices, and is being used to train a neural network. This neural network is distributed across the network, to all of the devices, with little changes to its weights. Those changes are meant to keep all the neural networks a little slightly different and are part of the evolutionary learning algorithm(since if all the neural networks were the same, no learning can occur).

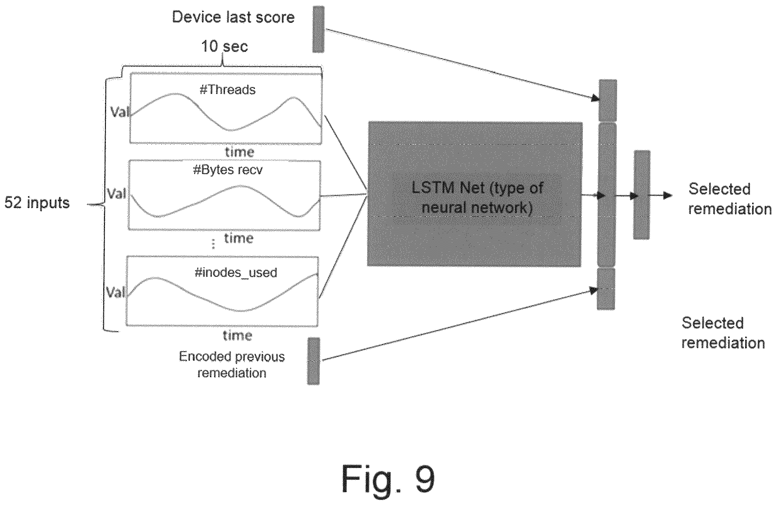

The Remediation Selector is an LSTM neural network (shown in Fig. 9) that receives: (i) the 10 last timestamps of metrics collected by the feature extractor component; (ii) the previous output of the network; and (iii) the last score from the **Normal Behavior Assessment component** (describes below). The output of this neural network is the probability score of success for each of the 10 pre-defined remediation actions .

The LSTM neural network architecture is one layer of LSTM cells containing 10 cells, a concatenation layer, and 2 dense layers, one containing 60 units and the other is the output layer of 10, which is also the number of possible remediation.

**Normal Behavior Assessment component**

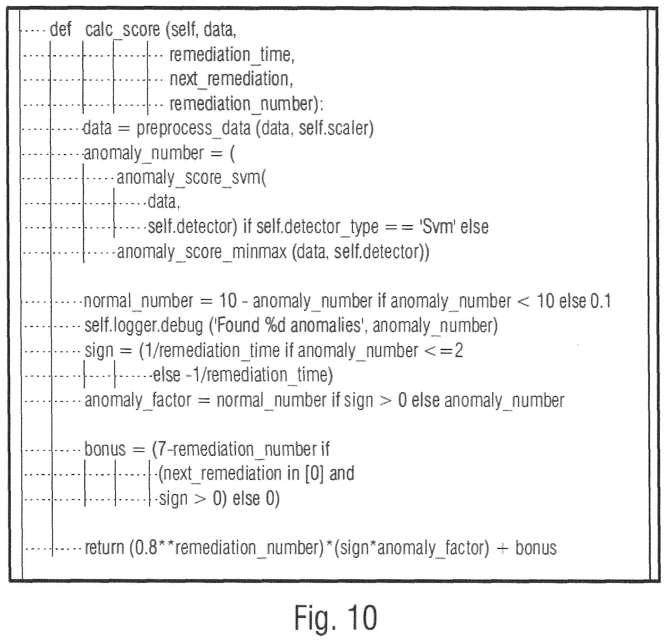

This component is responsible for giving feedback to the LSTM neural network, and report the status of the device. The component is doing so by learning the benchmark range of each feature from the feature extractor. The component counts the number of features out of range and reports the results of the calc_score function, which is shown in Fig. 10.

1. The feature extractor provides data to the calc_score function. For every 10 timestamps, 2 anomalies are allowed in the provided data. The score function will be negative if there are more than 2 anomalies, i.e., the score will be negative as long as the device is not in a normal state .

2. If the LSTM neural network predicts that no action should be taken, and the device was in a normal state, the function gives a scoring bonus (exact computation in the code above). The bonus is given for a state for which the network is making good predictions. The bonus is given for predicting to take no action when no action should be taken.

3. The score gets exponentially smaller for every additional remediation the agent tries.

The remediation agent is based on two main algorithms:

**The Remediation algorithm:**

1. the anomaly detection mechanism detects an attack;
2. Remediation agent is waking up from sleep mode;
3. Feature extractor collects 10 seconds of metrics, filter them and sends them to the neural network;
4. The neural network makes a prediction for the action that the agent should take to handle the attack;
5. The action is performed, and the agent goes to sleep mode for 20 seconds;
6. Normal Behavior Component calculates the score;
7. If the score is negative, go to step 3, else go to sleep mode. If remediation attempts > 5, go to sleep mode.

**The Learning algorithm:**

The learning algorithm is based on principles from genetic learning and evolutionary strategies. The learning consists of the following steps:

1. Attack all devices in the network;
2. Wait for the attack to end and for all agents to go to sleep mode;
3. Only after all the agents finished their remediation process, call the update model procedure;

4. Repeat.

$$W_{new} = \frac{score_1 \cdot W_1 + scores \cdot W_2}{score_1 + score_2}$$

The update model operation is used to update the weights of the neural network. Update model procedure:

- Selection: selects agents with the highest scores - the number of agents to select is a hyper parameter of the algorithm. This example tried 5 and 8; selecting 5 led to better results. The logic of choosing this number is to choose a number that is approximately 25 percent of the number of agents.
- If almost all the scores are negative (less than 3 in this case), reinitialize the neural network using the following formula:

$$W_{new} = \sqrt{\frac{2}{Dim(W_{new})(1) + Dim(W_{new})(2)}} \, \mathcal{N}(0,1)$$

  ○ Don't continue to the next steps. Reset Remediation Agent service.

- Get the models (the neural networks) of the selected agents;
- Select a random pair of the neural networks and perform a weighted mean of the two weights using their scores:
- With a probability of 0.7 add a random noise from Glorot (a common initialization scheme for deep NNs) normal distribution to the result of the last step

$$W_{new} = W_{new} + \sqrt{\frac{2}{Dim(W_{new})(1) + Dim(W_{new})(2)}} \, \mathcal{N}(0,1)$$

- Save weights
- Reset agent score
- Reset Remediation Agent service

## The System Training Process

In order to train the system, there is a need for the following abilities:

a. Stable Local Area Network **LAN** (a local area network (LAN) is a group of computers and peripheral devices that share a common communications line or wireless link to a server within a distinct geographic area) that is fit for file sharing.
b. Ability to seclude attacks on the devices in the network.
c. Ability to run the evolutionary algorithm in a distributed way.

The training process is performed according to the following steps:

- Launching an attack, waiting for all the devices to finish reacting and sharing the scores.
- Running one iteration of the evolutionary algorithm.
- Repeating.
- Stopping when all the attacks are being handled as expected according to the plan.

Fig. 8 is a block diagram of the system proposed by the present invention for a single IoT device. The device's memory 1 consists of the device's operation software. This device memory 1 is connected to the device's processor 2, which sends commands to the device's different components and connected to the device's network card 3, which connects the device's processor 2 to a data network, such as the internet. The device's processor 2 is connected to a software module called **Feature Extractor** 4, that receives, collects and analyzes data from the three device's components (the device's memory 1, the device's processor 2 and the device's network card 3). This Feature Extractor 4 reads and analyzes the device's operating software located in the device's memory 1, the commands sent by the device's processor 2 to the various device components and data from the device's network card, which is connected to a data network. It checks whether the processor's commands are compatible with the device's operating software or not. In case of hacking/attack by malware, there will be a mismatch between the device's operating software and commands given by the device's processor 2. In Addition, the Feature Extractor 4 records measurements from the device such as: the device temperature, the number of incoming bytes, the number of unique connections, etc. Those measurements will represent the device behavior, in each timestamp. Then, the Feature Extractor 4 extracts the device's behavioral pattern, checks whether it is normal or abnormal and sends it to a software module called Intrusion Detector 5, which examines the received behavioral pattern and decides whether there was a malware break/attack or there is a malfunction of the device itself. It can be any anomaly detection algorithm that inspects the internet connection and flags suspicious behavior as intrusions. If the Intrusion Detector 5 decides that there is a malware attack, it sends this decision to another software module called a **Remediation Selector 6,** an evolutionary learning-based software module that learns in real-time how different pre-defined actions affect the monitored devices. It receives the decision and the kind of malware attack from the Intrusion Detector 5 and sends remediation, repairing and neutralization commands to a LSTM Neural Network 7. This LSTM Neural Network 7 is a learning Artificial Intelligence **A/I** neural network, which is being trained, learns and uses the features from the Feature Extractor 4 together with knowledge of previous remediation(s) and sends the remediation (repairing actions) and neutralization commands to a software module called **Normal Behavior Assessment** 8. This **Normal Behavior Assessment** 8 assesses whether the device's behavior and operation are normal or abnormal. It uses a machine learning model that is responsible for giving feedback to the evolutionary learning algorithm of the system. This component is independent and responsible for estimating if the device is under a malware attack or not. If the behavior and operation of the device are normal, it can be concluded that the device is not under malware attack, which means that the remediation (repairing) and neutralization actions selected by the Remediation Selector 6 solved the problem and blocked the malware attack, and the system operation is completed by sending a command to Exit 9. If the behavior and operation of the device are not normal, the Normal Behavior Assessment 8 sends a command to the Remediation Selector 7 to change the remediation (repairing) and neutralization actions to other actions and the process is repeated.

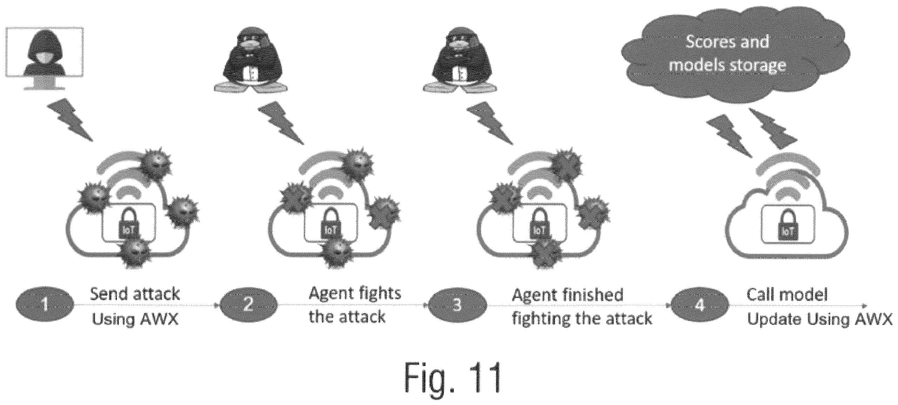

Fig. 11 is an illustration of the proposed system operation, learning and training process. Proactive Attacker 10 injects several known types of malware attacks into the device's operating system/controller to teach and train the LSTM Neural Network 7 (by Artificial Intelligence A/I). Software component (Agent) 11 responds to the maliciously designed injection and fights it through remediation, repair, and neutralization actions. Then, this software component (Agent) 11 tests whether the device has returned to normal behavior after the remediation, repairing, and neutralization actions using the normal behavioral testing assessment software module 8. If the response's remediation, repairing, and neutralization actions have returned the device to normal activity, it can be concluded that the malware attack identification model was correct. If the device does not return to normal activity, it can be concluded that the malware attack identification model was incorrect and the model is updated to respond correctly by changing the remediation, repairing and neutralization actions according to the type of malware attack the device faces with. This is actually the system learning process, which repeats itself until the attack problem is being solved (until the attack is being blocked/neutralized).

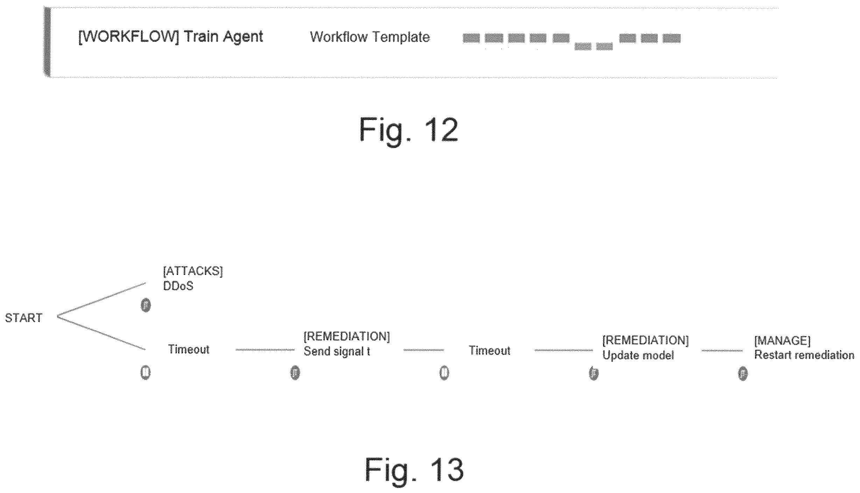

All of the training procedures are merged into one workflow in the provided AWX interface, and can be started by clicking the "Train agent" workflow (shown in Fig. 12) in the Templates menu. Workflows allow configuring a sequence of disparate job (or workflow) templates that may or may not share permissions. A workflow accomplishes the task of tracking the full set of jobs.

Job or workflow templates are linked together using a graph-like structure, called nodes (that can be jobs, syncs, etc.). A template can be part of different workflows or used multiple times in the same workflow. A copy of the graph structure is saved to a workflow job, upon launching the workflow.

The workflow graph in Fig. 13, includes a DDoS attack command that can be edited to be replaced by other attack commands,in order to generate other types of attacks, such as stree CPU attack, MIRAI attacks (a malware that turns networked devices running Linux into remotely controlled bots that can be used as part of a botnet in large-scale network attacks), etc.


**Performance Evaluation**

In this example, the remediation agent's ability to deal with stress-tests and simple cyber-attacks is empirically evaluated. The measurement in the table is the number of iterations of the learning algorithm required to run for all agents in the network to handle a stress test or a cyber-attack.

Attacks descriptions:

All the attacks (except for the DDoS) are present in the stress-ng library: **https://github.com/ColinlanKing/stress-ng**

Stress CPU: the stress test is run with 60% CPU load, CPU load slice 100

Stress Mem: the stress test is run with 60% memory load, CPU load slice 100

Stress Fork: the stress test is run with 60% CPU load, CPU load slice 60

Stress Dup: the stress test is run with 60% CPU, CPU load slice 60, number of forks 300

DDoS: DDoS attack that overloads port 22 has been implemented. Script can be found in the Gitlab

Table 1 - Iterations vs Stress tests

| | | | | | Number of Learning Iterations vs Stress Tests | |
|---|---|---|---|---|---|---|
| | Stress CPU | Stress Mem | Stress Fork | Stress Dup | DDoS inside the network | All the device are used for a DDoS attack |
| Trial 1 | 3 | 3 | 4 | 5 | 5 | 7 |
| Trial 2 | 3 | 5 | 2 | 7 | 6 | 5 |
| Trial 3 | 4 | 6 | 3 | 7 | 7 | 5 |
| **Average** | **3.66** | **4.66** | **3** | **6.33** | **6** | **5.66** |

From the performance table it can be seen that for some attacks it takes longer to learn how to perform remediation. As long as the attack is simple, the correct response can be learned relatively quickly (4-5 iterations), but when the attack effects more system components (like DDoS that effects both network and CPU), it takes longer to learn the proper response.

- Features selection:

    o Features that are not stable in a normal state should not be used;
    o Features that takes a lot of time to return to normal state after an attack should not be used as well, for example, the device temperature does not immediately drop to normal range when the attacks ends (long decay).

- The devices must be identical, both hardware and software-stack wise. Small differences in software or hardware might cause the Normal Behavior Assessment component not to function properly.

- The more devices used for training and deployment; the more variety of solutions the agents will be able to learn from. i.e., more devices, less learning time due to collaboration effect.

- The agents does not finish handling the attack immediately, in the RP testing environment it takes about 7 minutes for all the agents to finish, using the AWX scheduler to time the "Train agent" workflow.

- There are more genetic/evolutionary learning algorithms suitable for handling more complex tasks, in the domain for example: handling multiple attack types, like the one suggested by OpenAi (https://arxiv.org/pdf/1703.03864.pdf). Those algorithms can be distributed easily, and are fit for blockchain, but take a lot more time to converge. In future work, it might be interesting to try a variation of OpenAi's algorithm and perform a long experiment (dozens of learning iterations) launching multiple attack types, where the agent's task is learning how to react to different types of attacks.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

**Claims**

1. A method for automated neutralizing of fileless malware on connected IoT devices, comprising:

    a) by a Feature Extractor module (4), receiving and collecting data regarding operation software of one of the IoT devices from the device's memory (1), commands from the device's processor (2) and data from the device's network card (3);
    b) analyzing the collected data and extracting the device's behavioral pattern by said Feature Extractor module;
    c) examining said behavioral pattern of the device received and deciding whether there was a malware break/attack or there is a malfunction of the device itself, and using an anomaly detection algorithm that inspects an internet connection and flags suspicious behavior as intrusions;

d) in case that there is a malware attack in the device, sending remediation, repairing and neutralization commands;

e) by a Normal Behavior Assessment module (8), assessing whether the device's behavior and operation are normal or abnormal, using a machine learning model, and concluding that the device is not under malware attack anymore if the behavior and operation of the device are found normal and that the device is still under malware attack if the behavior and operation of the device are not normal; and

f) sending a command by said Normal Behavior Assessment module to change the remediation and neutralization actions following the conclusion that the device is still under malware attack,

**characterized in that** said extracted behavioral pattern is sent to an Intrusion Detector (5) which comprises a plurality of distributed intrusion detector components,

wherein one or more of said distributed intrusion detector components receives said behavioral pattern extracted from said Feature Extractor (4), examines said received behavioral pattern, decides whether there was a malware break/attack or there is a malfunction of the device itself by learning from all the devices in the network by means of a network communication module, and sends the decision regarding occurrence of the malware attack and type of malware attack from said Intrusion Detector to a Remediation Selector (6),

wherein said Remediation Selector comprises a collaborative evolutionary learning-based software module and a plurality of distributed remediation selector components, wherein one or more of said distributed remediation selector components are capable of learning in real-time from all devices in the network by means of the network communication module how different pre-defined actions affect said plurality of devices, receive from said Intrusion Detector a decision if the device is under a malware attack and its kind, and send the remediation, repair and neutralization commands to an LSTM Neural Network (7),

wherein the command to change the remediation and neutralization actions is sent from said Normal Behavior Assessment module (8) to said Remediation Selector.

2. The method according to claim 1, wherein a training process of the LSTM neural network (7) includes the following steps:

    i. injecting by a proactive attacker (10), known types of malware attacks into the device's operating system/ controller, for training the LSTM Neural Network using Artificial Intelligence, A/I;

    ii. responding by a software component agent (11) to said maliciously designed injection using remediation, repair, and neutralization actions;

    iii. testing whether the device has returned to normal behavior after the remediation, repairing, and neutralization actions by using the Normal Behavior Assessment module (8);

    iv. if said response's remediation, repair, and neutralization actions have returned the device to normal activity, concluding that the machine learning model was correct;

    v. if the device does not return to normal activity, updating the model to respond correctly by changing the remediation, repair and neutralization actions according to a current type of malware attack to the device; and

    vi. repeating said training process, until the attack is terminated and the malware is blocked/neutralized.

3. The method according to claim 1, wherein the Normal Behavior Assessment module is an independent component.

4. A system for automated neutralization of fileless malware on connected IoT devices, , said system comprising:

    a) a plurality of the IoT devices, each comprising a memory (1) for storing operation software of the device, a processor (2) for sending commands to components of the device, a network card (3) for connecting said processor to a data network, and a Feature Extractor module (4) for receiving, collecting and analyzing data from said memory, said processor and said network card, and for recording measurements from the device and extracting a behavioral pattern of the device;

    b) means (5) for examining said behavioral pattern received from said Feature Extractor and deciding whether there was a malware break/attack or there is a malfunction of the device itself;

    c) means (6) for receiving a decision if the device is under a malware attack and its kind, and sending remediation, repairing and neutralization commands to an LSTM Neural Network;

    d) said LSTM Neural Network (7), being trained by Artificial Intelligence, A/I, by using the features from said Feature Extractor, along with knowledge of one or more previous remediations; and

    e) a Normal Behavior Assessment module (8) for receiving remediation actions and neutralization commands from said LSTM neural network and, using a machine learning model, assessing whether the device's behavior and operation are normal or abnormal to estimate whether the device is still under a malware attack or not, said Normal Behavior Assessment module terminates said neutralization commands whenever said remediation and neutralization actions blocked/neutralized said malware attack and said device returned to its normal operation,

**characterized in that** said means for examining said behavioral pattern is an Intrusion Detector (5) that comprises a plurality of distributed intrusion detector components each capable of examining said behavioral pattern received from said Feature Extractor (4) with an anomaly detection algorithm and deciding whether there was a malware break/attack or there is a malfunction of the device itself by learning from all the devices in the network by means of a network communication module **and in that** said means for receiving a decision is a Remediation Selector (6) that comprises a collaborative evolutionary learning-based software module and a plurality of distributed remediation selector components that are capable of learning in real-time from all devices in the network by means of the network communication module how different pre-defined actions affect said plurality of devices, receiving from said Intrusion Detector the decision if the device is under a malware attack and its kind, and sending the remediation, repairing and neutralization commands to said LSTM Neural Network (7).

5. The system according to claim 4, wherein the anomaly detection algorithm is operable to inspect an internet connection and flag suspicious behavior as intrusions.

6. The system according to claim 4, wherein the Normal Behavior Assessment module (8) is an independent component that is additionally configured to provide feedback to the evolutionary learning algorithm .

**Patentansprüche**

1. Ein Verfahren zur automatischen Neutralisierung von dateiloser Malware auf angeschlossenen IoT-Geräten, umfassend:

a) Das Empfangen und Sammeln, durch ein Merkmals-Extraktionsmodul (4), von Daten über die Betriebssoftware eines der IoT-Geräte aus dem Speicher (1) des Geräts, von Befehlen vom Prozessor (2) des Geräts und von Daten von der Netzwerkkarte (3) des Geräts;

b) Analysieren der gesammelten Daten und Extrahieren des Verhaltensmusters des Geräts durch das Merkmals-Extraktionsmodul;

c) Untersuchen des empfangenen Verhaltensmusters des Geräts und Entscheiden, ob ein Malware-Einbruch/Angriff oder eine Fehlfunktion des Geräts selbst vorliegt, und Verwenden eines Algorithmus zur Erkennung von Anomalien, der eine Internetverbindung untersucht und verdächtiges Verhalten als Eindringen kennzeichnet;

d) im Falle eines Malware-Angriffs auf das Gerät, Senden von Befehle zur Abhilfe, Reparatur und Neutralisierung;

e) Bewerten, durch ein Normalverhaltens-Bewertungs-Modul (8), unter Verwendung eines Maschinen-Lernmodells, ob das Verhalten und der Betrieb des Geräts normal oder anormal sind, und Schlussfolgern, dass das Gerät nicht mehr von Malware angegriffen wird, wenn das Verhalten und der Betrieb des Geräts als normal befunden werden, und dass das Gerät immer noch von Malware angegriffen wird, wenn das Verhalten und der Betrieb des Geräts nicht normal sind; und

f) Senden eines Befehls durch das Normalverhaltens-Bewertungs-Modul, um die Abhilfe- und Neutralisierungsmaßnahmen zu ändern, nachdem festgestellt wurde, dass das Gerät weiterhin von Malware angegriffen wird, **dadurch gekennzeichnet, dass** das extrahierte Verhaltensmuster an einen Intrusion-Detektor (5) gesendet wird, der eine Vielzahl von verteilten Intrusion-Detektor-Komponenten umfasst, wobei eine oder mehrere der verteilten Intrusion-Detektor-Komponenten das von dem Merkmalsextraktor (4) extrahierte Verhaltensmuster empfängt bzw. empfangen, das empfangene Verhaltensmuster untersucht bzw. untersuchen, entscheidet bzw. entscheiden, ob es einen Malware-Einbruch/Angriff gab oder eine Fehlfunktion des Geräts selbst vorliegt, indem es von allen Geräten im Netzwerk mittels eines Netzwerkkommunikationsmoduls lernt, und die Entscheidung bezüglich des Auftretens des Malware-Angriffs und der Art des Malware-Angriffs von dem Intrusion-Detektor an einen Abhilfeselektor (6) sendet, wobei der Abhilfeselektor ein auf kollaborativem evolutionärem Lernen basierendes Softwaremodul und eine Vielzahl von verteilten Abhilfeselektor-Komponenten umfasst, wobei eine oder mehrere der verteilten Abhilfeselektor-Komponenten in der Lage sind, in Echtzeit von allen Geräten im Netzwerk mittels des Netzwerkkommunikationsmoduls zu lernen, wie sich verschiedene vordefinierte Aktionen auf die Vielzahl von Geräten auswirken, von dem Intrusion-Detektor eine Entscheidung zu empfangen, ob das Gerät einem Malware-Angriff ausgesetzt ist und welcher Art dieser ist, und die Abhilfe-, Reparatur- und Neutralisierungsbefehle an ein neuronales LSTM-Netzwerk (7) zu senden,

wobei der Befehl zum Ändern der Abhilfe- und Neutralisierungsmaßnahmen von dem Normalverhaltens-Bewertungs-Modul (8) an den Abhilfeselektor gesendet wird.

2. Verfahren nach Anspruch 1, wobei ein Trainingsprozess des neuronalen LSTM-Netzwerks (7) die folgenden Schritte umfasst:

i. Injizieren bekannter Arten von Malware-Angriffen in das Betriebssystem/den Controller des Geräts durch einen proaktiven Angreifer (10), um das neuronale LSTM-Netzwerk mit Hilfe von künstlicher Intelligenz (KI) zu trainieren;

ii. Reagieren eines Softwarekomponenten-Agenten (11) auf die böswillig entworfene Injektion unter Verwendung von Abhilfe-, Reparatur- und Neutralisierungsmaßnahmen;

iii. Prüfen, ob das Gerät nach den Abhilfe-, Reparatur- und Neutralisierungsmaßnahmen zum normalen Verhalten zurückgekehrt ist, indem das Normalverhaltens-Bewertungs-Modul (8) verwendet wird;

iv. Wenn die Abhilfe-, Reparatur- und Neutralisierungsmaßnahmen das Gerät wieder in den Normalzustand zurückversetzt haben, Schlussfolgern, dass das Maschinen-Lernmodell korrekt war;

v. Wenn das Gerät nicht in den Normalzustand zurückkehrt, Aktualisieren des Modells, um korrekt zu reagieren, indem die Abhilfe-, Reparatur- und Neutralisierungsmaßnahmen entsprechend einem aktuellen Typ eines Malware-Angriffs auf das Gerät geändert werden; und

vi. Wiederholen des Trainingsprozesses, bis der Angriff beendet und die Malware blockiert/neutralisiert ist.

3. Verfahren nach Anspruch 1, wobei das Normalverhaltens-Bewertungs-Modul eine unabhängige Komponente ist.

4. Ein System zur automatisierten Neutralisierung von dateiloser Malware auf angeschlossenen IoT-Geräten, wobei das System Folgendes umfasst:

a) eine Vielzahl von IoT-Geräten, die jeweils einen Speicher (1) zum Speichern von Betriebssoftware des Geräts, einen Prozessor (2) zum Senden von Befehlen an Komponenten des Geräts, eine Netzwerkkarte (3) zum Verbinden des Prozessors mit einem Datennetzwerk und ein Merkmalsextraktions-Modul (4) zum Empfangen, Sammeln und Analysieren von Daten von dem Speicher, dem Prozessor und der Netzwerkkarte und zum Aufzeichnen von Messungen von dem Gerät und zum Extrahieren eines Verhaltensmusters des Geräts umfassen;

b) Mittel (5) zum Untersuchen des von dem Merkmalsextraktor empfangenen Verhaltensmusters und zum Entscheiden, ob es einen Malware-Einbruch/Angriff gab oder eine Fehlfunktion des Geräts selbst vorliegt;

c) Mittel (6) zum Empfangen einer Entscheidung, ob das Gerät einem Malware-Angriff ausgesetzt ist, und dessen Art, und zum Senden von Befehlen zur Abhilfe, Reparatur und Neutralisierung an ein neuronales LSTM-Netzwerk;

d) das neuronale LSTM-Netzwerk (7), das durch künstliche Intelligenz (KI) trainiert wird, indem die Merkmale aus dem Merkmalsextraktor zusammen mit dem Wissen über eine oder mehrere frühere Abhilfemaßnahmen verwendet werden; und

e) ein Normalverhaltens-Bewertungs-Modul (8) zum Empfangen von Abhilfemaßnahmen und Neutralisierungsbefehlen von dem neuronalen LSTM-Netzwerk und unter Verwendung eines Maschinen-Lernmodells zum Bewerten, ob das Verhalten und der Betrieb des Geräts normal oder abnormal sind, um einzuschätzen, ob das Gerät immer noch einem Malware-Angriff ausgesetzt ist oder nicht, wobei das Normalverhaltens-Bewertungs-Modul die Neutralisierungsbefehle beendet, wenn die Abhilfe- und Neutralisierungsmaßnahmen den Malware-Angriff blockiert/neutralisiert haben und das Gerät zu seinem normalen Betrieb zurückgekehrt ist,

**dadurch gekennzeichnet, dass** das Mittel zum Untersuchen des Verhaltensmusters ein Intrusion-Detektor (5) ist, der eine Vielzahl von verteilten Intrusion-Detektor-Komponenten umfasst, die jeweils in der Lage sind, das von dem Merkmalsextraktor (4) empfangene Verhaltensmuster mit einem Anomalie-Erkennungsalgorithmus zu untersuchen und zu entscheiden, ob es einen Malware-Einbruch/Angriff gab oder ob eine Fehlfunktion des Geräts selbst vorliegt, indem sie von allen Geräten in dem Netzwerk mittels eines Netzwerkkommunikationsmoduls lernen, **und dass** das Mittel zum Empfangen einer Entscheidung ein Abhilfeselektor (6) ist, der ein auf kollaborativem evolutionärem Lernen basierendes Softwaremodul und eine Vielzahl von verteilten Abhilfeselektor-Komponenten umfasst, die in der Lage sind, in Echtzeit von allen Geräten im Netzwerk mittels des Netzwerkkommunikationsmoduls zu lernen, wie verschiedene vordefinierte Maßnahmen die Vielzahl von Geräten beeinflussen, die Entscheidung von dem Intrusion-Detektor zu empfangen, ob das Gerät einem Malware-Angriff ausgesetzt ist, und dessen Art, und die Abhilfe-, Reparatur- und Neutralisierungsbefehle an das neuronale LSTM-Netzwerk (7) zu senden.

**5.** System nach Anspruch 4, wobei der Algorithmus zur Erkennung von Anomalien in der Lage ist, eine Internetverbindung zu untersuchen und verdächtiges Verhalten als Eindringen zu kennzeichnen.

**6.** System nach Anspruch 4, wobei das Normalverhaltens-Bewertungs-Modul (8) eine unabhängige Komponente ist, die zusätzlich so konfiguriert ist, dass sie dem evolutionären Lernalgorithmus Rückmeldung gibt.

**Revendications**

**1.** Procédé de neutralisation automatique de logiciels malveillants sans fichiers sur des appareils IoT connectés, comprenant :

a) la réception et la collecte, par un module Extracteur de Caractéristiques (4), de données concernant le logiciel d'exploitation de l'un des appareils IoT à partir de la mémoire de l'appareil (1), d'ordres issus du processeur de l'appareil (2) et de données à partir de la carte réseau de l'appareil (3) ;
b) l'analyse des données collectées et l'extraction du modèle comportemental de l'appareil par ledit module Extracteur de Caractéristiques ;
c) l'examen dudit modèle comportemental de l'appareil reçu et la décision entre une panne/attaque de logiciel malveillant ou un dysfonctionnement de l'appareil lui-même, et l'utilisation d'un algorithme de détection qui inspecte une connexion Internet et signale les comportements suspects en tant qu'intrusions ;
d) dans le cas où il s'agit d'une attaque malveillante dans l'appareil, l'envoi d'ordre de remédiations, réparation et neutralisation ;
e) l'évaluation, par un module d'Evaluation de Comportement Normal (8), de la normalité ou de l'anormalité du comportement et du fonctionnement de l'appareil, l'utilisation d'un modèle d'apprentissage automatique et la conclusion que l'appareil ne fait plus l'objet d'une attaque de logiciel malveillant si le comportement et le fonctionnement de l'appareil sont jugés normaux et que l'appareil fait toujours l'objet de l'attaque d'un logiciel malveillant si le comportement et le fonctionnement de l'appareil ne sont pas normaux ; et
f) l'envoi d'un ordre par ledit module d'Evaluation de Comportement Normal afin de changer les actions de remédiation et de neutralisation à la suite de la conclusion selon laquelle l'appareil fait toujours l'objet d'une attaque de logiciel malveillant,
**caractérisé en ce que** ledit modèle comportemental extrait est envoyé à un détecteur d'intrusion (5) qui comprend une pluralité de composants détecteur d'intrusion distribués,
dans lequel un ou plusieurs desdits composants détecteurs d'intrusion distribués reçoivent ledit model comportemental extrait dudit Extracteur de Caractéristiques (4), examinent ledit modèle comportemental reçu, décident s'il s'agit d'une panne/attaque de logiciel malveillant ou d'un dysfonctionnement de l'appareil lui-même en apprenant à partir de l'ensemble des appareils du réseau au moyen d'un module de communication réseau et envoient la décision concernant l'occurrence de l'attaque par logiciel malveillant et le type d'attaque à partir dudit Détecteur d'intrusion vers un Sélecteur de Remédiation (6),
dans lequel ledit Sélecteur de Remédiation comprend un module de logiciel d'apprentissage évolutif collaboratif et une pluralité de composants sélecteurs de remédiation distribués, dans lequel un ou plusieurs desdits composants sélecteurs de remédiation distribués sont capables d'apprendre en temps réel à partir de tous les appareils du réseau, au moyen du module de communication réseau, comment différentes actions prédéfinies affectent ladite pluralité d'appareils, et reçoivent, à partir dudit Détecteur d'intrusion, une décision indiquant si l'appareil fait l'objet de l'attaque d'un logiciel malveillant et le type d'attaque et envoient les ordres de remédiation, de réparation et de neutralisation à un Réseau Neuronal LSTM (7),
dans lequel l'ordre de changer d'actions de remédiation ou de neutralisation est envoyé à partir dudit module d'Evaluation de Comportement Normal (8), vers ledit Sélecteur de Remédiation.

**2.** Procédé selon la revendication 1, dans lequel le processus d'entraînement du réseau neuronal LSTM (7) comprend les étapes suivantes :

i. l'injection par un attaquant proactif (10) de types connus d'attaques de logiciels malveillants dans le système/contrôleur d'exploitation de l'appareil afin d'entraîner le Réseau Neuronal LSTM en utilisant l'intelligence Artificielle, AI ;
ii. la réponse par un agent logiciel (11) à ladite injection malveillante par l'usage d'actions de remédiation, de réparation et de neutralisation ;
iii. le test du retour ou non à un comportement normal de l'appareil après les actions de remédiation, de réparation et de neutralisation par l'usage du module d'Evaluation de Comportement Normal (8) ;

iv. si lesdites actions de remédiation, de réparation et de neutralisation en réponse ont restauré l'activité normale de l'appareil, la conclusion que le modèle d'apprentissage automatique était correct ;

v. si l'appareil ne revient pas à une activité normale, la mise à jour du modèle afin de répondre correctement en modifiant les actions de remédiation, de réparation et de neutralisation en fonction d'un type courant d'attaque de logiciel malveillant sur l'appareil ; et

vi. la répétition dudit processus d'entraînement jusqu'à ce que l'attaque soit terminée et le logiciel malveillant soit bloqué/neutralisé.

3. Procédé selon la revendication 1, dans lequel le module d'Evaluation du Comportement Normal est un composant indépendant.

4. Système de neutralisation automatique de logiciels malveillants sans fichiers sur des appareils IoT connectés, comprenant :

a) un pluralité d'appareils IoT, comprenant chacun une mémoire (1) pour le logiciel d'opération de stockage de l'appareil, un processeur (2) pour l'envoi d'ordre aux composants de l'appareil, une carte réseau (3) pour connecter ledit processeur à un réseau de données, et un module Extracteur de Caractéristiques (4) pour la réception, la collecte et l'analyse des données à partir de ladite mémoire, dudit processeur et de ladite carte réseau, et pour l'enregistrement des mesures à partir de l'appareil et l'extraction d'un modèle comportemental de l'appareil ;

b) des moyens (5) pour examiner ledit modèle comportemental reçu à partir dudit Extracteur de Caractéristiques et décider s'il s'agit d'une panne/attaque de logiciel malveillant ou d'un dysfonctionnement de l'appareil lui-même ;

c) de moyens (6) pour recevoir une décision concernant ou non l'attaque de l'appareil par un logiciel malveillant et le type d'attaque et l'envoi d'ordre de remédiation, de réparation et de neutralisation à un réseau neuronal LSTM ;

d) ledit réseau neuronal LSTM (7) étant entraîné par l'intelligence Artificielle, A/I, par l'utilisation de caractéristiques issues dudit Extracteur de Caractéristiques, avec la connaissance de l'une ou plusieurs remédiations précédentes ; et

e) un module d'Evaluation de Comportement Normal (8) pour la réception d'actions de remédiation et d'ordres de neutralisation dudit réseau neuronal LSTM et l'usage d'un modèle d'apprentissage automatique évaluant si le comportement et le fonctionnement de l'appareil sont normaux ou anormaux afin d'estimer si l'appareil fait toujours l'objet d'une attaque de logiciel malveillant ou non, ledit module d'Evaluation de Comportement Normal cesse lesdits ordres de neutralisation dès que lesdites actions de remédiation et de neutralisation ont bloqué/neutralisé ladite attaque de logiciel malveillant et que ledit appareil a retrouvé un fonctionnement normal,

**caractérisé en ce que** lesdits moyens pour l'examen dudit modèle comportemental sont un Détecteur d'intrusion (5) qui comprend une pluralité de composants détecteurs d'intrusion distribués qui sont chacun capables d'examiner ledit modèle comportemental reçu dudit Extracteur de Caractéristiques (4) avec un algorithme de détection d'anomalie et décidant s'il y a eu une panne/attaque de logiciel malveillant ou s'il s'agit d'un dysfonctionnement de l'appareil lui-même en apprenant à partir de tous les appareils dans le réseau au moyen d'un module de communication réseau et **en ce que** lesdits moyens pour recevoir une décision est un Sélecteur de Remédiation (6) qui comprend un module logiciel d'apprentissage évolutif collaboratif et une pluralité de composants sélecteurs de remédiation distribués qui sont capables d'apprendre en temps réel à partir de tous les appareils du réseau, au moyen du module de communication réseau, comment différentes actions prédéfinies affectent ladite pluralité d'appareils, et reçoivent, à partir dudit Détecteur d'intrusion une décision indiquant si l'appareil fait l'objet de l'attaque d'un logiciel malveillant et le type d'attaque et envoient les ordres de remédiation, de réparation et de neutralisation à un Réseau Neuronal LSTM (7).

5. Système selon la revendication 4, dans lequel l'algorithme de détection d'anomalie est utilisable pour inspecter une connexion Internet et marquer les comportements suspects en tant qu'intrusions.

6. Système selon la revendication 4, dans lequel le module d'Evaluation de Comportement Normal (8) est un composant indépendant qui est également conçu pour fournir un retour vers l'algorithme d'apprentissage évolutif.

Fig. 1

Fig. 2

# Fig. 3

# Cont. Fig. 3

Processes

Remediation Score

Network (TCP connections)

# Cont. Fig. 3

**Total Threads**

192.168.2.135 — 192.168.2.136 — 192.168.2.137 ···· 192.168.2.138
192.168.2.139 ··· 192.168.2.141 ···· 192.168.2.142 ··· 192.168.2.143
192.168.2.145 — 192.168.2.146 — 192.168.2.147 ···· 192.168.2.148
192.168.2.149 ··· 192.168.2.150 ···· 192.168.2.151 ··· 192.168.2.152

**Disk IO (read bytes/sec)**

192.168.2.135 — 192.168.2.136 — 192.168.2.137 ···· 192.168.2.138
192.168.2.139 ··· 192.168.2.141 ···· 192.168.2.142 ··· 192.168.2.143
192.168.2.145 — 192.168.2.146 — 192.168.2.147 ···· 192.168.2.148
192.168.2.149 ··· 192.168.2.150 ···· 192.168.2.151 ··· 192.168.2.152

**Network ID (recv bytes/sec)**

192.168.2.135 — 192.168.2.136 — 192.168.2.137 ···· 192.168.2.138
192.168.2.139 ··· 192.168.2.141 ···· 192.168.2.142 ··· 192.168.2.143
192.168.2.145 — 192.168.2.146 — 192.168.2.147 ···· 192.168.2.148
192.168.2.149 ··· 192.168.2.150 ···· 192.168.2.151 ··· 192.168.2.152

# Cont. Fig. 3

### Disk (%)

100%
75%
50%
25%
0%
08:50 08:52 08:54 08:56 08:58 09:00 09:02

--- 192.168.2.135 — 192.168.2.136 — 192.168.2.137 ---- 192.168.2.138
--- 192.168.2.139 -- 192.168.2.141 ---- 192.168.2.142 --- 192.168.2.143
--- 192.168.2.145 — 192.168.2.146 — 192.168.2.147 ---- 192.168.2.148
--- 192.168.2.149 -- 192.168.2.150 ---- 192.168.2.151 --- 192.168.2.152

### Disk ID (write bytes/sec)

400 kBs
300 kBs
200 kBs
100 kBs
0 Bs
08:50 08:52 08:54 08:56 08:58 09:00 09:02

---- 192.168.2.135 — 192.168.2.136 — 192.168.2.137 ---- 192.168.2.138
--- 192.168.2.139 -- 192.168.2.141 ---- 192.168.2.142 --- 192.168.2.143
---- 192.168.2.145 — 192.168.2.146 — 192.168.2.147 ---- 192.168.2.148
--- 192.168.2.149 — 192.168.2.150 ---- 192.168.2.151 --- 192.168.2.152

### Network ID (sent bytes/sec)

1.5 MBs
1.0 MBs
500 kBs
0 Bs
08:50 08:52 08:54 08:56 08:58 09:00 09:02

---- 192.168.2.135 — 192.168.2.136 — 192.168.2.137 ---- 192.168.2.138
-- 192.168.2.139 — 192.168.2.141 ---- 192.168.2.142 --- 192.168.2.143
---- 192.168.2.145 — 192.168.2.146 — 192.168.2.147 ---- 192.168.2.148
---- 192.168.2.149 -- 192.168.2.150 ---- 192.168.2.151 --- 192.168.2.152

Fig. 4

EP 4 009 586 B1

EP 4 009 586 B1

admin

MY VIEW

**VIEWS**
- Dashboard
- Jobs
- Schedules
- My View

**RESOURCES**
- Templates
- Credentials
- Projects
- Inventories
- Inventory Scripts

**ACCESS**
- Organizations
- Users
- Teams

**ADMINISTRATION**
- Credential Types
- Notifications
- Management Jobs
- Instance Groups
- Applications
- Settings

JOB TEMPLATES (14)

SEARCH 🔍 [KEY]

[Compact] Expanded | Name (Ascending) ⌄

- DDoS Attack [Job Template] ▦▦▦▦▦▦▦▦▦▦
- Deploy Chrony [Job Template] ▦▦▦▦▦▦▦▦▦▦
- Deploy Telegraf [Job Template] ▦▦▦▦▦▦▦▦▦▦
- Install Prerequisites [Job Template] ▦▦▦▦▦▦▦▦▦▦
- Install Python [Job Template] ▦□□□□□□□□□
- Mirai Attack [Job Template] ▦▦▦▦▦▦▦▦▦▦
- Reboot [Job Template] ▦□□□□□□□□□
- Stress cache flush [Job Template] ▦▦▦□□□□□□□
- Stress CPU [Job Template] ▦▦▦▦▦▦▦▦▦▦
- Stress dup [Job Template] ▦▦▦□□□□□□□
- Stress fork [Job Template] ▦▦▦▦▦▦▦▦▦▦
- Stress MEM [Job Template] ▦▦▦▦▦▦▦▦▦▦
- Stress sigsegv [Job Template] ▦▦▦▦▦▦▦▦▦▦
- Upgrade Pip [Job Template] ▦▦▦▦▦▦▦▦▦▦

JOB (340)                          [MY JOBS] All JOBS

SEARCH 🔍 [KEY]

[Compact] Expanded | Finish Time (Descending) ⌄

- ○ 849-Deploy Telegraf [Playbook Run]
- ○ 848-shell [Command]
- ○ 846-Install Python 3.6 [Playbook Run]
- ○ 845-shell [Command]
- ○ 844-Testbed Playbooks [SCM Update]
- ○ 842-Stress CPU [Playbook Run]
- ○ 840-Stress CPU [Playbook Run]
- ○ 838-Stress CPU [Playbook Run]
- ○ 836-Stress CPU [Playbook Run]
- ◉ 834-Stress CPU [Playbook Run]
- ○ 832-Stress CPU [Playbook Run]
- ○ 830-Stress CPU [Playbook Run]
- ◉ 828-Stress CPU [Playbook Run]
- ○ 824-Deploy Telegraf [Playbook Run]

Fig. 5

Fig. 6

Fig. 7

Fig. 8

Fig. 9

```
def  calc_score (self, data,
                          remediation_time,
                          next_remediation,
                          remediation_number):
     data = preprocess_data (data, self.scaler)
     anomaly_number = (
          anomaly_score_svm(
               data,
               self.detector) if self.detector_type == 'Svm' else
          anomaly_score_minmax (data, self.detector))

     normal_number = 10 - anomaly_number if anomaly_number < 10 else 0.1
     self.logger.debug ('Found %d anomalies', anomaly_number)
     sign = (1/remediation_time if anomaly_number <=2
               else -1/remediation_time)
     anomaly_factor = normal_number if sign > 0 else anomaly_number

     bonus = (7-remediation_number if
               (next_remediation in [0] and
               sign > 0) else 0)

     return (0.8**remediation_number)*(sign*anomaly_factor) + bonus
```

Fig. 10

Fig. 11

EP 4 009 586 B1

[WORKFLOW] Train Agent        Workflow Template

## Fig. 12

START
[ATTACKS]
DDoS

Timeout ———— [REMEDIATION] ———— Timeout ———— [REMEDIATION] ———— [MANAGE]
Send signal t                              Update model          Restart remediation

## Fig. 13